# EUROPEAN PATENT APPLICATION

(11) **EP 2 175 412 A1**
(43) Date of publication of application: **14.04.2010**
(21) Application number: 09252146.7
(22) Date of filing: 08.09.2009
(51) Int. Cl.: G06Q 30/00

(54) **Promotional material playback upon trigger event**

(30) Priority: 07.10.2008 US 246845
(71) Applicant: Sony Corporation, Tokyo 108-0075 (JP); SONY ELECTRONICS, INC., Park Ridge, New Jersey 07656 (US)
(72) Inventor: Carpio, Frederik, San Diego California 92127 (US); Frazier, Milton Massey, San Marcos California 92069 (US); Georgis, Nikolaos, San Diego California 92128 (US)
(74) Representative: Scaddan, Gareth Casey

(57) **Abstract**

Promotional content is downloaded from the Internet along with a trigger event defining when the content is to be played. The trigger event may be a time of day, a usage event or pattern, a weather event, or the arrival at a geographic location.

## Description

### Field of the Invention

The present invention relates generally to promotional material playback upon a trigger event. Embodiments of the present invention relate more particularly to providing promotional material in audio-video form along with trigger instructions to cause a client device to automatically play the promotional material upon the occurrence of a trigger event.

### Background of the Invention

Promotional content such as advertisements may be downloaded to client devices over the Internet. As understood herein, downloading at the time it is desired for the advertisement to be played might be problematic owing to network congestion. Or, the client device might be offline and unavailable to receive and play back the content.

### Summary of the Invention

Various respective aspects and features of the invention are defined in the appended claims. Combinations of features from the dependent claims may be combined with features of the independent claims as appropriate and not merely as explicitly set out in the claims.

A mobile computer is configured to receive promotional content along with instructions to play the promotional content upon the occurrence of a trigger event. The computer is also configured to monitor for the trigger event and to play the promotional content upon the occurrence of the trigger event.

The trigger event may be a time of day, a usage event or pattern, a weather event, or the arrival at a geographic location.

In one embodiment, a tangible computer storage medium is readable by a processor to receive an audio-video advertisement and to receive, along with the advertisement, a trigger event. The processor monitors for an occurrence of the trigger event and in response to sensing the occurrence of the trigger event, plays the advertisement.

In another embodiment, a method includes receiving an audio-video advertisement on a video storage device and also receiving an entertainment program on the device. The advertisement is played in response to a predetermined scene content from the entertainment program being played.

### Brief Description of the Drawings

Embodiments of the invention will now be described with reference to the accompanying drawings, throughout which like parts are referred to by like references, and in which:
Figure 1 is a schematic view of a non-limiting system in accordance with present principles;
Figure 2 is a schematic view of another non-limiting system in accordance with present principles;
Figure 3 is a flow chart of non-limiting logic which may be undertaken by one or more processors executing code elements stored on one or more computer readable media; and
Figure 4 is a flow chart of alternate logic.

### Description of the Example Embodiment

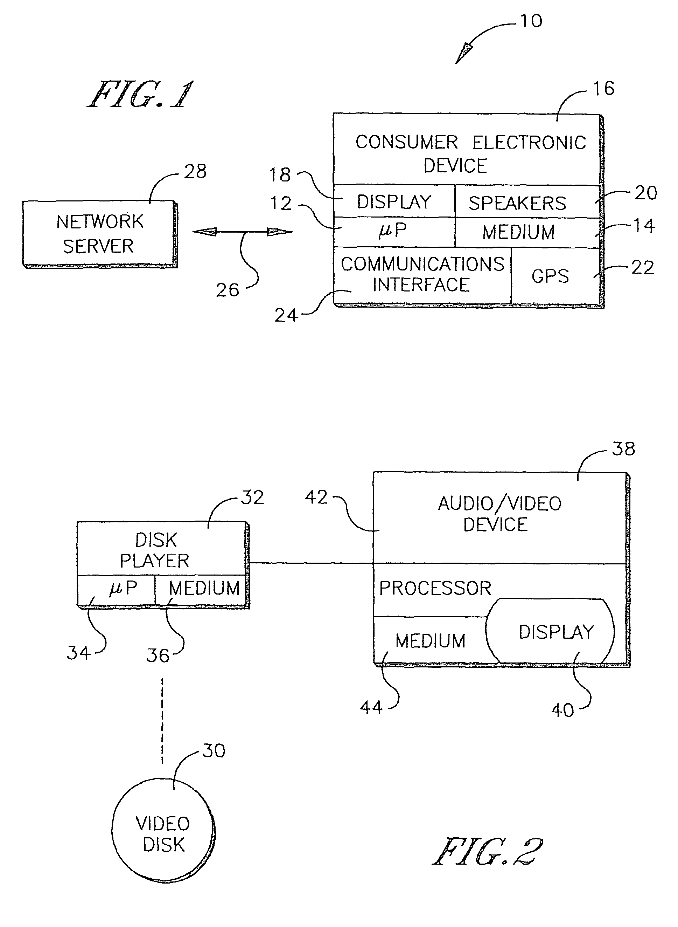

Referring initially to Figure 1, a consumer electronic (CE) device is shown, generally designated 10, that includes a processor 12 and tangible digital storage medium 14 that may be, without limitation, a magnetic or optical disk drive, a solid state device such as random access memory or read-only memory or flash memory, a removable stick medium or removable floppy disk, etc. The medium 14 and processor 12 may be stored in a housing 16 as shown along with a display 18 such as but not limited to a high definition (HD) matrix display or a standard definition cathode ray tube display. The processor 12 may output signals to the display 18 and to one or more audio speakers 20, and it may receive input from an input device such as one or more of a keypad, keyboard, mouse, etc. The CE device may be a cell phone, camera, laptop computer, game console, digital television, or other computerized, typically portable device.

As shown in Figure 1, in some embodiments the CE device 10 can also include a position receiver 22 such as a global positioning satellite (GPS) receiver that inputs geographic location signals to the processor 12. Some embodiments of the CE device 10 may further include a communications interface 24 such as but not limited to a wired or wireless modem or transceiver configured to communicate, via the Internet 26, with one or more content/advertisement servers 28 to display the content/advertisement on the display 18 and/or speakers 20. Thus, the content, which can include entertainment content such as movies or TV programs as well as Web-based content, and the advertisements may be audio-video.

The interface 24 may be, without limitation, a WiFi transceiver, WIMAX transceiver, or telephone transceiver such as a global system for mobile communication (GSM) transceiver, code division multiple access (CDMA) transceiver or variant, etc. The interface 24 communicates with the processor 12. Or, the interface 24 may be a Bluetooth transceiver or other short-range interface.

Figure 2 shows an alternate system including a video storage device 30 such as a video disk that may be inserted into and removed from a player 32 that includes a player processor 34 and tangible computer storage medium 36. Content on the disk 30 may be played on an audio-video device 38 such as a TV that communicates with the disk player 32. The AV device 38 can include a video display 40 controlled by an AV processor 42 accessing a computer readable storage medium 44. The disk 30 may bear one or more audio-video advertisements as well as one or more entertainment programs.

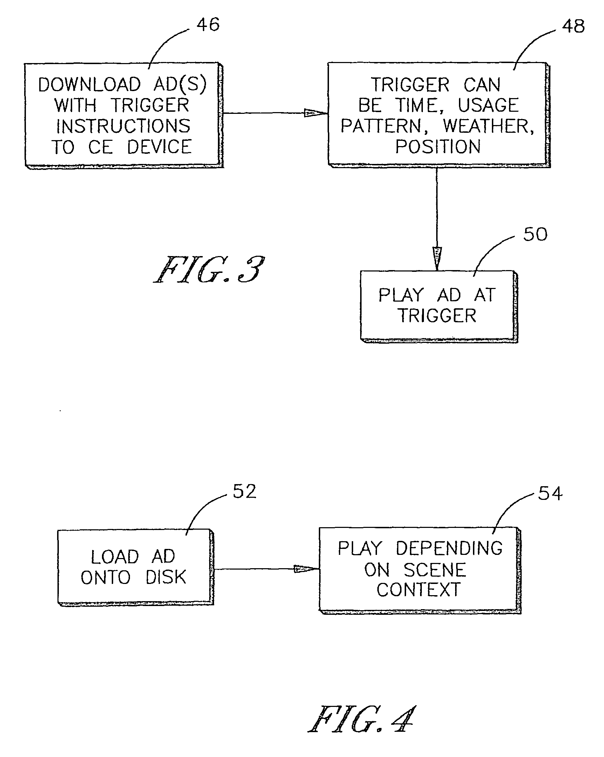

Figure 3 shows logic that may be used in connection with the system of Figure 1 while Figure 4 shows logic that may be used in connection with the system of Figure 3. Commencing at block 46 in Figure 3, promotional content such as advertisements are downloaded from the server 28 to the CE device 16, typically when network congestion is low. Also downloaded from the server 28 are instructions to play the promotional content upon the occurrence of one or more trigger events. As indicated at block 48, trigger events may include a time of day, a usage event or pattern, a weather event (e.g., "sunshine all day" indicating a good circumstance for a theme park advertisement, "rainy day" indicating a good circumstance for a retail store advertisement, etc.) as indicated by information received from, e.g., an Internet weather server (which may be implemented by the server 28), or the arrival at a geographic location as indicated by the GPS receiver 22 such as the home or office or retail outlet.

As examples of usage events or patterns, a trigger event may be indicated by the opening of a particular application by the CE processor 12. Other usage events may include power on and power down (with the ad being played during the power down process prior to deenergization).

As examples of usage patterns, a pattern may be established by the invocation of a sequence of functions on the CE device 10 one or more times, with the sequence triggering the display of an advertisement.

The above events may be combined. For example, an advertisement may be played only when, for instance, a power on usage event is sensed while at a retail outlet location. In any case, the CE device monitors for the trigger event and at block 50 plays the promotional content upon the occurrence of the trigger event.

Figure 4 shows that the promotional content is loaded onto the disk 30 in Figure 2. The promotional content is played at block 54 depending on, e.g., a predetermined scene content from an entertainment program on the disk being played. For example, an entertainment program depicting a character drinking a soda may be briefly interrupted by an advertisement for the brand of soda being consumed. Or, the advertisement may be displayed simultaneously with the entertainment program in a picture-in-picture window.

While the particular PROMOTIONAL MATERIAL PLAYBACK UPON TRIGGER EVENT is herein shown and described in detail, it is to be understood that the subject matter which is encompassed by the present invention is limited only by the claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A device that:
is configured to receive promotional content along with instructions to play the promotional content upon the occurrence of at least one trigger event;
is configured to monitor for the trigger event; and
is configured to play the promotional content upon the occurrence of the trigger event.

2. The device of Claim 1, wherein the trigger event is a time of day.

3. The device of Claim 1, wherein the trigger event is a usage event.

4. The device of Claim 1, wherein the trigger event is a usage pattern.

5. The device of Claim 1, wherein the trigger event is a weather event.

6. The device of Claim 1, wherein the trigger event is an arrival at a geographic location.

7. A tangible computer storage medium readable by a processor to:
receive at least one audio-video advertisement;
receive, along with the advertisement, at least one trigger event;
monitor for an occurrence of the trigger event; and
in response to sensing the occurrence of the trigger event, play the advertisement.

8. The medium of Claim 7, wherein the trigger event is a time of day.

9. The medium of Claim 7, wherein the trigger event is a usage event.

10. The medium of Claim 7, wherein the trigger event is a usage pattern.

11. The medium of Claim 7, wherein the trigger event is a weather event.

12. The medium of Claim 7, wherein the trigger event is an arrival at a geographic location.

13. A method comprising:
receiving at least one audio-video advertisement on a video storage device;
receiving at least one entertainment program on the device; and
playing the advertisement in response to a predetermined scene content from the entertainment program being played.

14. The method of Claim 13, wherein the device is a video disk.
